# EUROPÄISCHE PATENTSCHRIFT

(11) **EP 2 247 367 B1**
(45) Veröffentlichungstag und Bekanntmachung des Hinweises auf die Patenterteilung: **23.01.2013**
(21) Anmeldenummer: 08872888.6
(22) Anmeldetag: 29.10.2008
(51) Int. Cl.: C01B 31/20

(54) **VERFAHREN ZUR VERDICHTUNG VON KOHLENDIOXID**
METHOD FOR COMPRESSING CARBON DIOXIDE
PROCÉDÉ DE COMPRESSION DE DIOXYDE DE CARBONE

(30) Priorität: 25.02.2008 EP 08003404
(43) Veröffentlichungstag der Anmeldung: 10.11.2010
(73) Patentinhaber: Siemens Aktiengesellschaft, 80333 München (DE)
(72) Erfinder: MÖNK, Thomas, 45964 Gladbeck (DE); NÖLKE, Marcus, Spring, TX-77381 (US); SCHLÜTER, Lars, 47445 Moers (DE)
(74) Vertreter: Wolff, Harry
(86) Internationale Anmeldenummer: PCT/EP2008/064666
(87) Internationale Veröffentlichungsnummer: WO 2009/106160

(56) Entgegenhaltungen:
- GB-A- 2 416 389
- US-A- 5 931 021
- US-A1- 2003 177 785
- ASPELUND ET AL: "Gas conditioning-The interface between CO2 capture and transport" 20070616, Bd. 1, Nr. 3, 16. Juni 2007 (2007-06-16), Seiten 343-354, XP022119495 in der Anmeldung erwähnt

## Beschreibung

Kohlenstoffdioxid entsteht bei der Verbrennung von kohlenstoffhaltigen Brennstoffen. Bei einem gegebenen Energieträger ist die Menge des erzeugten Kohlenstoffdioxids direkt von der Menge des Brennstoffs und damit der umgesetzten Energie abhängig. Moderne Anlagen und Betriebsverfahren können zwar die im Brennstoff enthaltene Energie besser nutzen als früher, aber die Entstehung des Gases nicht verhindern.

Da noch kein wirksames und wirtschaftliches Verfahren zur Kohlenstoffdioxidabtrennung zur Verfügung steht, entweicht diese Menge in die Atmosphäre und trägt zur globalen Erwärmung bei. Um zu vermeiden, dass Kohlenstoffdioxid in die Atmosphäre gelangt, ist es bekannt, Kohlenstoffdioxid in Hohlräume tief unter der Erdoberfläche einzulagern. So wird in der Nordsee seit Jahren Klimagas in Gesteinsschichten tief unter den Meeresgrund gepumpt.

Hierzu muss Kohlenstoffdioxid von Umgebungsdruck und - temperatur auf ein Druckniveau gebracht werden, dass ein Einbringen des Gases über Pipelines in eine unterirdische Lagerstätte erlaubt.

Dies bedeutet, dass eine Verdichtungseinheit für das Kohlenstoffdioxid einen Enddruck von 80 - 300 bar liefern muss.

Hierzu wird eine entsprechend große Leistung benötigt.

Aus dem "International Journal of Greenhouse gas Control I (2007)" ist ein Aufsatz von Audun Aspelund und Kristin Jordal bekannt geworden, der eine Co₂-Verdichtung bis unter dem kritischen Druck auf etwa 65bar-und eine nachfolgende Kühlung zur Kondensation mit nachfolgender Pumpförderung auf einen Enddruck von 150bar vorschlägt.

Nachteilhaft an dem beschriebenen Verfahren ist insbesondere die verhältnismäßig niedrige Rückkühltemperatur von etwa 10°C, die vor allem in der warmen Jahrezeit mit natürlichen Wärmesenken nur sehr schwierig oder gar nicht bereitzustellen ist. Hierbei ist insbesondere zu beachten, dass die zu verdichtenden Mengen des Kohlendioxids die Rückkühlung einer gewaltigen Verdichtungsanlage erfordert.

Aufgabe der Erfindung ist es, ein Verfahren zur Verdichtung von Kohlenstoffdioxid anzugeben, bei welchem eine möglichst geringe Leistung benötigt wird.

Diese Aufgabe wird für ein Verfahren der eingangs genannten Art dadurch gelöst, dass in einem ersten Schritt das zunächst gasförmige Kohlenstoffdioxid in einem Verdichter mittels eines im wesentlichen isothermen Prozesses auf einen Druck verdichtet wird, welcher oberhalb des Drucks des kritischen Punktes von Kohlenstoffdioxid liegt, in einem zweiten Schritt das Kohlenstoffdioxid in einer Kühlvorrichtung auf eine Temperatur unterhalb der Temperatur des kritischen Punktes abgekühlt wird und in einem dritten Schritt das Kohlendioxid dann in einer Pumpeinrichtung auf einen vorgegebenen Enddruck verdichtet wird.

Bei dem erfindungsgemäßen Verfahren wird der Enddruck durch den kombinierten Einsatz von Turbo-Verdichter und Pumpeinrichtung erreicht. Der Turbo-Verdichter komprimiert das Gas von Umgebungsbedingungen auf einen vorläufigen Enddruck von 80 - 90 bar. Dabei bewegt sich der erfindungsgemäße Prozess nah an einem isothermen Prozess. Am Ausgang des Turbo-Verdichters beträgt die Temperatur des Gases dann ca. 120 - 140° C. Durch gezieltes Rückkühlen des Kohlenstoffdioxids bei 80 - 90 bar auf ein Temperaturniveau von 10 - 30° C erreicht man einen Zustand von Kohlenstoffdioxid, in welchem die Dichte nahe der Dichte einer typischen Flüssigkeit liegt. Das in diesem Zustand vorliegende Kohlenstoffdioxid kann dann mit Hilfe von Pumpen auf einen gewünschten Enddruck von bis zu 400 bar gebracht werden. Der Energieaufwand für die Pumpe ist dabei in der Regel deutlich niedriger als eine vergleichbare Verdichtung mit einem Turbo-Verdichter.

Würde man den geforderten Enddruck von 200 bar nicht mit einer Pumpe, sondern mit einem Verdichter anderen Typs, z.B. mit einem Einwellenverdichter durchführen, würde man ungefähr 10 % mehr Leistung benötigen und hätte das Kohlenstoffdioxid bei einer für die Pipeline viel zu hohen Temperatur vorliegen. Dann wäre ein zusätzlicher Nachkühler erforderlich.

Das erfindungsgemäße Verfahren hat gegenüber dem Stand der Technik den bedeutsamen Vorteil, dass die Rückkühltemperatur im Bereich der kritischen Temperatur von Kohlendoxid - also bei 31°C liegt. Eine derartige Temperatur kann problemlos mittels einer natürlichen Wärmesenke bereitgestellt werden, so dass keine, wie im Stand der Technik erforderlich, zusätzlichen Kalteanlagen bereitgestellt werden müssen. Dementsprechend steigt der Wirkungsgrad der Gesamtanlage und der Einsatz des Primärenergieträgers kann bei gleicher Leistungsabgabe der Gesamtanlage reduziert werden. Dementsprechend sinkt auch das - wenn auch in einlagerungsfähiger Form - erzeugte Kohlendioxid. Auf diese Weise werden insbesondere natürliche Endlagerungsstätten weniger schnell ausgelastet.

Darüber hinaus kann der Wärmetauscher zur Rückkühlung des verdichteten Kohlendoxids einfacherer ausgebildet werden, da der Phasenwechsel in dem Nassdampfgebiet von gasförmigem Kohlendioxid zum flüssigen eine kostspieligere Materialauswahl erforderlich macht.

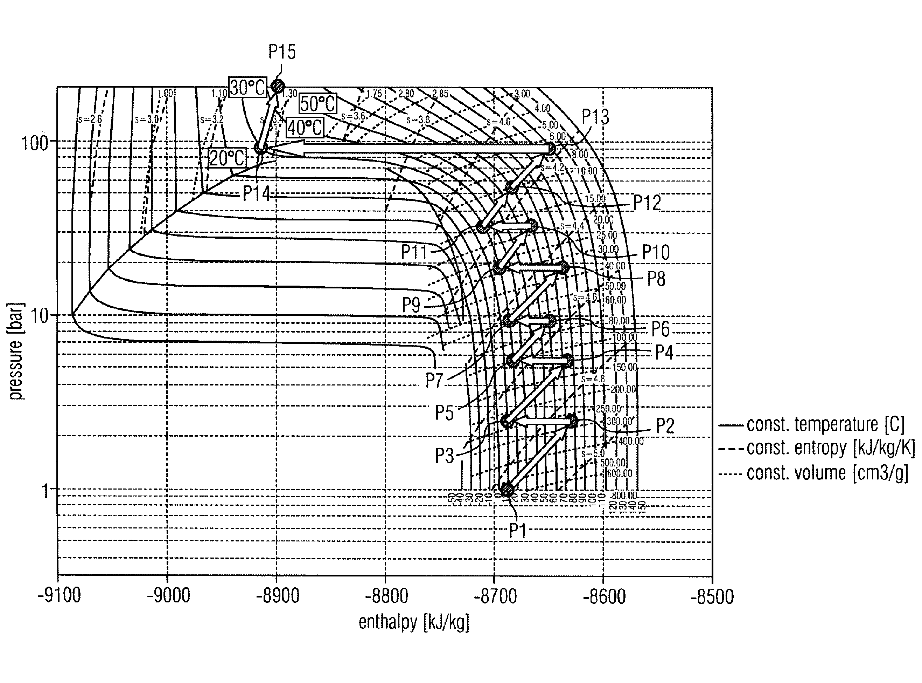

Nachstehend soll das erfindungsgemäße Verfahren anhand eines in der Zeichnung dargestellten Druck-Enthalpy-Diagramms näher beschrieben werden.

In dem dargestellten Druck-Enthalpy-Diagramm ist in Form von Pfeilen und Punkten die Verfahrenskennlinie des erfindungsgemäßen Verfahrens dargestellt.

Am Anfang des Verfahrens im Punkt P1 befindet sich das zu verdichtende Kohlenstoffdioxid unter Umgebungstemperaturen. Im Getriebe im Turbo-Verdichter bzw. im Getriebe-Verdichter wird das Kohlenstoffdioxid von Umgebungsdruck im Punkt P1 auf ca. 90 bar im Punkt P13 komprimiert. Dabei wird - bis auf die letzte Stufe - nach jeder Verdichtungsstufe zurückgekühlt, um dem isothermen Verdichtungsprozess Rechnung zu tragen.

D.h. zwischen den Punkten P1 und P2, P3 und P4, P5 und P6, P7 und P8, P9 und P10, P11 und P13 findet jeweils eine Verdichtung des Kohlenstoffdioxids statt. Dazwischen findet jeweils zwischen den Punkten P2 und P3, P4 und P5, P6 und P7, P8 und P9, P10 und P11 eine Zurückkühlung des Kohlenstoffdioxids auf jeweils konstantem Druckniveau statt. Trotz dieses mehrfachen Rückkühlens beträgt die Temperatur am Austritt des Getriebe-Verdichters ca. 120° C.

Danach wird in einer besonderen Kühlvorrichtung das Kohlenstoffdioxid von 120° C auf 30° C zurückgekühlt, dargestellt durch den Pfeil zwischen P13 und P14. Dabei steigt die Dichte des Kohlenstoffdioxids deutlich an und erreicht eine Dichte von ca. 750 kg/m³. Damit besitzt das überkritische Kohlenstoffdioxid bzw. das überkritische Gas eine Dichte vergleichbar der Dichte einer Flüssigkeit und kann nahezu inkompressibel gepumpt werden. Dadurch ist der Energieaufwand zum Pumpen auf 200 bar Enddruck verhältnismäßig gering.

Das besondere des erfindungsgemäßen Verfahrens ist das Verdichten um den kritischen Punkt herum, wodurch auf ein Kondensieren und auf eine 2-Phasen-Strömung verzichtet wird. Der kritische Punkt für Kohlenstoffdioxid liegt bei 74 bar und 31° C. Dem Druck-Enthalpy-Diagramm lässt sich entnehmen, dass die Verfahrenskennlinie des erfindungsgemäßen Verfahrens über dem kritischen Punkt für Kohlenstoffdioxid verläuft.

## Patentansprüche

1. Verfahren zur Verdichtung von Kohlenstoffdioxid
**dadurch gekennzeichnet, dass**
- in einem ersten Schritt das zunächst gasförmige Kohlenstoffdioxid in einem Verdichter mittels eines im wesentlichen isothermen Prozesses auf einen Druck verdichtet wird, welcher oberhalb des Drucks des kritischen Punktes von Kohlenstoffdioxid liegt,
- in einem zweiten Schritt das Kohlenstoffdioxid in einer Kühlvorrichtung auf eine Temperatur unterhalb der Temperatur des kritischen Punktes abgekühlt wird, um eine Dichte nahe der Dichte einer typischen Flüssigkeit zu erreichen und
- in einem dritten Schritt das Kohlendioxid dann in einer Pumpeinrichtung auf einen vorgegebenen Enddruck verdichtet wird.

## Claims

1. Method for compressing carbon dioxide
**characterized in that**
- in a first step the initially gaseous carbon dioxide is compressed in a compressor by means of an essentially isothermal process to a pressure which lies above the pressure of the critical point of carbon dioxide,
- in a second step the carbon dioxide is cooled in a cooling device to a temperature below the temperature of the critical point, in order to achieve a density which is close to the density of a typical liquid, and
- in a third step the carbon dioxide is then compressed in a pumping device to a predetermined discharge pressure.

## Revendications

1. Procédé de compression du dioxyde de carbone, **caractérisé en ce que**
- dans un premier stade, on comprime le dioxyde de carbone d'abord gazeux dans un compresseur au moyen d'un processus sensiblement isotherme jusqu'à une pression, qui est supérieure à la pression du point critique du dioxyde de carbone,
- dans un deuxième stade, on refroidit le dioxyde de carbone dans un dispositif de refroidissement jusqu'à une température inférieure à la température du point critique, pour obtenir une masse volumique proche de la masse volumique d'un liquide typique, et
- dans un troisième stade, on comprime le dioxyde de carbone ensuite dans un dispositif de pompage jusqu'à une pression finale donnée à l'avance.
